# EUROPÄISCHE PATENTANMELDUNG

(11) **EP 1 286 488 A1**
(43) Veröffentlichungstag der Anmeldung: **26.02.2003**
(21) Anmeldenummer: 01440274.7
(22) Anmeldetag: 20.08.2001
(51) Int. Cl.: H04J 13/00

(54) **Optischer Kodekonverter**

(71) Anmelder: ALCATEL, 75008 Paris (FR)
(72) Erfinder: Pfeiffer, Thomas, Dr., 70569 Stuttgart (DE)
(74) Vertreter: Menzietti, Domenico, Dipl.-Ing

(57) **Zusammenfassung**

Optische Signale werden in OCDM-Systemen bisher in dem auf der Sendeseite zugeordneten optischen Übertragungskanal bis zur Empfangsseite übertragen. Diese Art der Übertragung ist starr und ermöglicht nur einfache Netztopologien, wie z.B. Punkt-zu-Punkt. Es ist eine Aufgabe der Erfindung eine flexible Zuweisung von Kanälen zu ermöglichen. Der erfindungsgemäße Kodekonverter dient der Umsetzung eines optischen Signals von einem ersten optischen Übertragungskanal auf einen zweiten optischen Übertragungskanal, beinhaltet einen ersten optischen Filter (1) zur Filterung des ersten optischen Übertragungskanals, eine optische Breitbandquelle (3) und ein zweites optisches Filter (4) zur Filterung des zweiten optischen Übertragungskanals und zeichnet sich durch eine einfache und effektive Art der Kodekonversion in einem OCDM-System aus, die z.B. für optisches Routing verwendet werden kann. Dadurch wird der Aufbau von OCDM-Systemen mit flexiblen Topologien ermöglicht. Optische Router werden an Netzknoten platziert und führen optisches Routing durch, z.B. zwecks Aufbau von optischen Internetverbindungen.

## Beschreibung

Die Erfindung betrifft einen optischen Kodekonverter für OCDM.

OCDM-Systeme beinhalten optische Filter, die u.a. zur Kodierung und Dekodierung von optischen Signalen verwendet werden. OCDM wird auch als OCDMA bezeichnet; OCDM = Optical Code Division Multiplex, OCDMA=Optical Code Division Multiple Access. OCDM basiert auf spektraler Kodierung von breitbandigen optischen Quellen. Das Licht einer mit zu übertragenden Daten modulierten LED wird beispielsweise durch ein optisches Filter geleitet und auf diese Weise kodiert; LED=Light Emitting Diode. Mehrere dieser LED und optische Filter Kombinationen werden auf der Sendeseite z.B. über einen optischen Koppler mit einem EDFA verbunden, der mit einer optischen Glasfaserleitung verbunden ist; EDFA=Erbium Doped Fibre Amplifier. Auf diese Art und Weise werden unterschiedlich kodierte optische Signale generiert, die gemeinsam verstärkt über die Glasfaser übertragen werden. Über optische Splitter kann eine Übertragung zu mehreren Empfangsseiten erfolgen. Jede Empfangsseite beinhaltet beispielsweise einen differentiellen Empfänger mit einem entsprechenden optischen Filter zur Dekodierung der für die Empfangsseite bestimmten optischen Signale.

Ein optisches Filter ist beispielsweise als Mach-Zehnder-Filter ausgeführt. Im Mach-Zehnder-Filter wird das empfangene OCDM-Signal über zwei Pfade weitergeleitet, die komplementäre Übertragungsfunktionen aufweisen. Das Mach-Zehnder-Filter kann sowohl zur Kodierung als auch zur Dekodierung von OCDM-Signalen verwendet werden.

Auf der Sendeseite werden z.B. pro optischem Übertragungskanal ein optisches Filter verwendet. Die optischen Filter müssen gegeneinander gut abgestimmt sein, um z.B. ein Übersprechen zu reduzieren. Auf der Empfangsseite wird z.B. ein optisches Filter verwendet, das auf den optischen Übertragungskanal abgestimmt wird, der für die Empfangsseite vorgesehen ist. Alternativ wird auf der Empfangsseite z.B. die gleiche Anzahl von optischen Filtern verwendet wie auf der Sendeseite. Die optischen Filter auf der Empfangsseite sind auf die optischen Filter auf der Empfangsseite abgestimmt.

Optische Signale werden in OCDM-Systemen bisher in dem auf der Sendeseite zugeordneten optischen Übertragungskanal bis zur Empfangsseite übertragen. Diese Art der Übertragung ist starr und ermöglicht nur einfache Netztopologien, wie z.B. Punkt-zu-Punkt.

Es ist eine Aufgabe der Erfindung eine flexible Zuweisung von Kanälen zu ermöglichen.

Gelöst wird diese Aufgabe durch einen optischen Kodekonverter nach Anspruch 1.

Der erfindungsgemäße Kodekonverter zeichnet sich durch eine einfache und effektive Art der Kodekonversion in einem OCDM-System aus, die z.B. für optisches Routing verwendet werden kann. Dadurch wird der Aufbau von OCDM-Systemen mit flexiblen Topologien ermöglicht. Optische Router werden an Netzknoten platziert und führen optisches Routing durch, z.B. zwecks Aufbau von optischen Internetverbindungen. Das OCDM-System kann z.B. als optisches Übertragungsnetz und/oder optisches Vermittlungsnetz verwendet werden. Über das OCDM-System können z.B. SONET-, SDH-, ATM-, VolP-, IP-, DSL-, Sprach-, Daten- oder Video-Signale übertragen werden; SONET = Synchronous Optical Network, SDH = Synchronous Digital Hierarchy, ATM = Asynchronous Transfer Mode, VolP = Voice over Internet Protocol = Sprache über Internet, IP = Internet Protocol, DSL = Digital Subscriber Line.

Bei einer vorteilhaften Ausgestaltung der Erfindung ist sowohl eine Kodekonversion als auch eine Wellenlängenkonversion möglich. Damit erweitert sich der Freiheitsgrad der Zuweisung von Signalen zu Übertragungskanälen in unterschiedlichen Wellenlängenbändern, so dass noch komplexere Netzstrukturen ermöglicht werden.

Vorteilhafte Ausgestaltungen sind den abhängigen Ansprüchen und der nachfolgenden Beschreibung zu entnehmen.

Im folgenden wird die Erfindung anhand von zwei Ausführungsbeispielen und unter Zuhilfenahme von zwei Figuren erläutert. Es zeigen:
Fig. 1 eine schematische Darstellung eines erfindungsgemäßen optischen Kanalkonverters,
Fig. 2 einen schematisch dargestellten Aufbau eines optischen Signalprozessors.

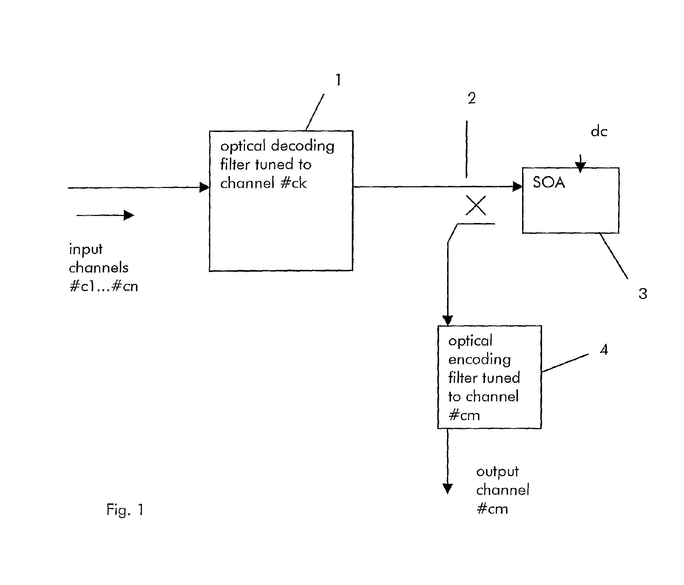

Das erste Ausführungsbeispiel wird nun unter Zuhilfenahme von Fig. 1 erläutert. Fig. 1 zeigt einen erfindungsgemäßen optischen OCDM-Kodekonverter zur Umsetzung eines optischen Signals von einem ersten optischen Übertragungskanal auf einen zweiten optischen Übertragungskanal, beinhaltend eine Reihenschaltung aus einem ersten optischen Filter 1 zur Filterung des ersten optischen Übertragungskanals, einen optischen Koppler 2 und eine optische Breitbandquelle 3, und ein zweites optisches Filter 4 zur Filterung des zweiten optischen Übertragungskanals, das mit dem optischen Koppler verbunden ist, wobei der zweite optische Überragungskanal sich vom ersten optischen Übertragungskanal unterscheidet. Anstelle des optischen Kopplers 2 kann auch ein optischer Circulator verwendet werden. Der optische OCDM-Kodekonverter dient zur Umsetzung von Kode Shift Keying Signalen. Diese sind beispielsweise in der noch nicht veröffentlichten, deutschen Patentanmeldung P 100 350 74.7 beschrieben.

Das optische Filter 1 hat einen Eingang und einen Ausgang. Dem Eingang wird ein Signalgemisch aus optischen OCDM-Signalen zugeführt. Die OCDM-Signale werden in überlagerten optischen Übertragungskanälen übertragen. Es sind beispielsweise n Übertragungskanäle c#1 bis c#n überlagert, wobei n eine natürliche Zahl zwischen z.B. Zwei und Hundert ist. Das optische Filter 1 ist nun so eingestellt, dass es geeignet ist, ein OCDM-Signal in einem speziellen Übertragungskanal zu detektieren, beispielweise im Übertragungskanal c#k mit k gleich eine natürliche Zahl zwischen Zwei und n. OCDM-Signale im Übertragungskanal c#k werden vom optischen Filter 1 bevorzugt weitergeleitet, d.h. OCDM-Signale im Übertragungskanal c#k werden gegenüber OCDM-Signalen in anderen Ubertragungskanälen weniger gedämpft und/oder mit höherer Intensität weitergeleitet.

Am Ausgang des optischen Filters 1 stehen somit OCDM-Signale im Übertragungskanal c#k zur Verfügung, die über den optischen Koppler 2, der z.B. als 3 dB Koppler ausgeführt ist, zur optischen Breitbandquelle 3 übertragen werden.

Die optische Breitbandquelle 3 wandelt die empfangenen OCDM-Signale im Übertragungskanal c#k in ein unkodiertes Signalspektrum um. Das von der optischen Breitbandquelle erzeugte unkodierte, breitbandige Signalspektrum wird dabei mit dem Ausgangssignal des ersten optischen Filters 1 moduliert. Ein Beispiel der Modulation, die als Intensitäts- oder Amplitudenmodulation bezeichnet werden kann, findet sich in der noch nicht veröffentlichten, deutschen Patentanmeldung P 100 137 18.0. Dieses unkodierten Signalspektrum wird über den optischen Koppler 2 dem zweiten optischen Filter 4 zugeführt.

Im zweiten optischen Filter 4 findet eine Kodierung des unkodierten optischen Signalspektrums in den gewünschten Übertragungskanal statt. Das unkodierte Signalspektrum wird kodiert und beispielsweise im Übertragungskanal c#m übertragen, wobei m gleich eine natürliche Zahl zwischen Zwei und n mit Ausnahme von k. Optional kann m auch gleich k gelten. Somit hat eine Kodekonversion zwischen Eingang des ersten optischen Filters 1 und dem Ausgang des zweiten optischen Filters 4 stattgefunden. OCDM-Signale, die im Übertragungskanal c#k empfangen wurden, werden nun im Übertragungskanal c#m übertragen.

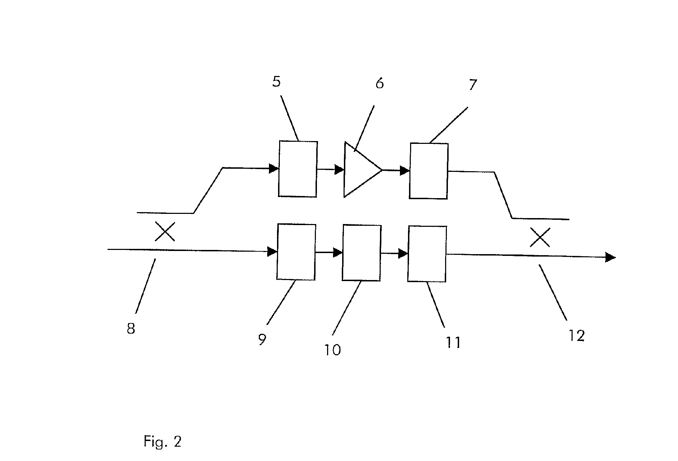

Das zweite Ausführungsbeispiel wird nun unter Zuhilfenahme von Fig. 2 erläutert.

Fig. 2 zeigt einen optischen Signalprozessor, der zwei parallel geschaltete Pfade aufweist, wobei in dem einen Pfad eine Reihenschaltung aus einem Dämpfungsglied 9 und einem dritten optischen Filter 11 zur Filterung des ersten optischen Übertragungskanals und in dem anderen Pfad eine Reihenschaltung aus einem Optisch/Elektrisch-Umsetzer 5 einen elektrischen, invertierenden Verstärker 6 und einen Elektrisch/Optisch-Umsetzer 7 angeordnet ist. Mittels des optischen Signalsprozessors wird ein erfindungsgemäßer optischer OCDM-Kodekonverter aufgebaut, der dem optischen OCDM-Kodekonverter aus Fig. 1 gleicht, mit der Ausnahme, dass anstelle des ersten optische Filters 1 der optischer Signalprozessor vorgesehen ist. Das dritte optische Filter 11 übernimmt die Aufgabe des ersten optischen Filters 1.

Der andere Pfad dient zur Generierung von Kompensationssignalen, die zur Reduktion von Übersprechen, dem sogenannten cross-talk, im gefilterten Übertragungskanal verwendet werden. Die Implementierung der Generierung der Kompensationssignale mittels der Reihenschaltung aus dem Optisch/Elektrisch-Umsetzer 5, dem elektrischen, invertierenden Verstärker 6 und dem Elektrisch/Optisch-Umsetzer 7 ist beispielhaft und nicht auf die Verwendung der angegebenen Bauelemente beschränkt.

Der optischer OCDM-Kodekonverter nach Fig. 2 arbeitet mit On/Off Keying Signalen.

Die Verstärkung des invertierenden Verstärkers und die Dämpfung des Dämpfungsglieds 9 sind unter Berücksichtigung der Dämpfungs- oder Verstärkungseigenschaften des Optisch/Elektrisch-Umsetzers 5 und des Elektrisch/Optisch-Umsetzers 7 derart aufeinander abgestimmt, dass die überlagerten Signale beider Pfade bezüglich der nicht zu filternden Übertragungskanäle eine konstante Signalform ergeben.

Der optischer Kodekonverter ist ferner, dadurch gekennzeichnet, dass zwischen Dämpfungsglied 9 und drittem optischen Filter 11 ein Verzögerungsglied 10 geschaltet ist, dessen Verzögerung derart ausgelegt ist, dass die Durchlaufzeit durch beide Pfade angeglichen ist. Im Idealfall ist die Durchlaufzeit identisch, so dass eine synchronisierte Überlagerung der gefilterten Signale und der Kompensationssignale erfolgt.

Der Optisch/Elektrisch-Umsetzer 5 ist z.B. als Photodiode, der Elektrisch/Optisch-Umsetzer 7 z.B. als Laserdiode und das dritte optische Filter 11 z.B. als einstellbares Fabry-Perot Filter ausgeführt ist.

Für beide Ausführungsbeispiele gilt:
Zwischen optischem Koppler 2 und zweitem optischen Filter 4 oder dem zweiten optischen Filter 4 nachgeschaltet ist vorteilhafterweise ein optischer Inverter geschaltet. Der optische Inverter ist z.B. als optische Breitbandquelle, als optischer Halbleiterverstärker oder als Leuchtdiode ausgeführt. Der optische Inverter dient dazu die in der optischen Breitbandquelle 3 generierte Signalinversion zu kompensieren. Auf diese Weise erhalten die Ausgangssignale am zweiten optischen Filter 4 die gleiche Polarität wie die Eingangssignale am ersten optischen Filter 1.
Zwischen optischem Koppler 2 und zweitem optischen Filter 4 oder dem zweiten optischen Filter 4 nachgeschaltet ist vorteilhafterweise ein Wellenlängenfilter geschaltet, um das Ausgangssignal des der optischen Breitbandquelle 3 in ein gewünschtes Wellenlängenband zu filtern. Das zweite optische Filter 4 dient dann zur Filterung des zweiten optischen Übertragungskanals, wobei der zweite optische Überragungskanal sich vom ersten optischen Übertragungskanal unterscheidet oder dem ersten optischen Übertragungskanal gleicht. Mittels des Wellenlängenfilters ist das Wellenlängenband der Ausgangssignale des optischen Kodekonverters wählbar. Dadurch kann der optische Kodekonverter sowohl als Kodekonverter als auch als Wellenlängenkonverter verwendet werden. Es kann somit eine Kodekonversion, eine Wellenlängenkonversion oder eine Kode- und Wellenlängenkonversion von empfangenen optischen OCDM-Signalen durchgeführt werden. Die am Eingang des ersten optischen Filters 1 empfangenen Signale werden beispielsweise bei in einem Wellenlängenband 1, z.B. 1520 bis 1530 nm oder 1330 bis 1350 nm, übertragen. Die Ausgangssignale des zweiten optischen Filters sollen z.B. in einem Wellenlängenband 2, z.B. 1540 bis 1550 nm bzw. 1300 bis 1320 nm, übertragen werden. Zur Wellenlängenkonversion wird das Wellenlängenfilter eingesetzt. Damit ist der optische Kanalkonverter sowohl zur Übertragungskanalumsetzung als auch zur Wellenlängenumsetzung geeignet, wodurch eine weitere Funktionalität und Flexibilität geschaffen wird.

Die optische Breitbandquelle 3 ist z.B. als optische Breitbandquelle, als optischer Halbleiterverstärker mit einem einstellbarem DC-Anschluß oder als High Power Leuchtdiode ausgeführt. Der DC-Anschluß dient zur Stromversorgung des Halbleiterverstärkers.

Das erste optische Filter 1 ist z.B. als Fabry-Perot Filter, als Mach-Zehnder-Filter oder als AWG-Filter ausgeführt, das zweite optische Filter 4 z.B. als Fabry-Perot Filter, als Mach-Zehnder-Filter oder als AWG-Filter und das dritte optische Filter 11 als Fabry-Perot Filter, als Mach-Zehnder-Filter oder als AWG-Filter. Alle drei Filter 1, 4, 11 können einstellbare Filter sein. Durch die Einstellbarkeit können die Filter nachgeregelt werden, insbesondere bei Drifts der optischen Filter auf der Sendeseite oder zur Einstellung unterschiedlicher zu filternder Ubertragungskanäle.

Zum Aufbau eines optischen Routers für ein OCDM-System werden mindestens zwei parallel geschaltete erfindungsgemäße optische Kodekonverter verwendet. Die Filter werden über eine Steuereinheit, z.B. einen Prozessor, derart eingestellt, dass zu den entsprechenden Umschaltzeitpunkten die jeweils entsprechenden Übertragungskanäle konvertiert werden. Zur Detektion der Umschaltzeitpunkte und der ersten und zweiten Übertragungskanäle detektiert die Steuereinheit z.B. einen Header, der z.B. in einem OCDM-Signal übertragen wird. Der optische Router enthält ferner z.B. optische Splitter und optische Koppler zum Aufsplitten empfangener und zum Kombinieren auszusendender OCDM-Signale. Es können Anschlüsse zu mehreren optischen Glasfaserleitungen zum Empfang mehrerer unterschiedlicher OCDM-Signale vorgesehen sein und Anschlüsse zu mehreren optischen Glasfaserleitungen zum Aussenden von unterschiedlichen OCDM-Signalen in konvertierten Übertragungskanälen auf ein und derselben Wellenlänge oder ein und demselben Wellenlängenband oder unterschiedlichen Wellenlängen bzw. unterschiedlichen Wellenlängenbändern. Ein optische Router kann auch teilweise aus optischen Schaltern und teilweise aus optischen Kodekonvertern aufgebaut sein. Die optischen Schalter bilden eine Matrix zum Routen von OCDM-Signalen ohne Kanalkonvertierung und die optischen Kodekonverter dienen zum Routen von OCDM-Signalen mit Kanalkonvertierung. Die optischen Schalter können zudem mit Wellenlängenfiltern verknüpft sein zwecks Routen von OCDM-Signalen mit Wellenlängen(band)konvertierung.

Ein erfindungsgemäßes OCDM-System beinhaltend mindestens zwei optische Router, die an Netzknoten angeordnet sind. Das OCDM-System ist z.B. als Maschennetz, Sternnetz, Bus, Baumnetz ausgeführt. An Netzknoten, die über optische Glasfaserverbindungen miteinander verbunden sind, können ein oder mehrere optische Router zwecks Routen von optischen OCDM-Signalen mit oder ohne Kanalkonvertierung und mit oder ohne Wellenlängen(band)konvertierung eingesetzt werden.

Der erfindungsgemäße optische Kodekonverter sowie der optische Router sind in vorteilhafter Weise ganz oder teilweise als integrierte Schaltung ausgeführt.

## Patentansprüche

1. Optischer OCDM-Kodekonverter zur Umsetzung eines optischen Signals von einem ersten optischen Übertragungskanal auf einen zweiten optischen Übertragungskanal, beinhaltend eine Reihenschaltung aus einem ersten optischen Filter (1) zur Filterung des ersten optischen Übertragungskanals, einen optischen Koppler (2) und eine optische Breitbandquelle (3), und ein zweites optisches Filter (4) zur Filterung des zweiten optischen Übertragungskanals, das mit dem optischen Koppler verbunden ist, wobei der zweite optische Überragungskanal sich vom ersten optischen Übertragungskanal unterscheidet.

2. Optischer Kodekonverter nach Anspruch 1, **dadurch gekennzeichnet, dass** anstelle des ersten optische Filters (1) ein optischer Signalprozessor vorgesehen ist, der zwei parallel geschaltete Pfade aufweist, wobei in dem einen Pfad eine Reihenschaltung aus einem Dämpfungsglied (9) und einem dritten optischen Filter (11) zur Filterung des ersten optischen Übertragungskanals und in dem anderen Pfad eine Reihenschaltung aus einem Optisch/Elektrisch-Umsetzer (5) einen elektrischen, invertierenden Verstärker (6) und einen Elektrisch/Optisch-Umsetzer (7) angeordnet ist.

3. Optischer Kodekonverter nach Anspruch 2, **dadurch gekennzeichnet, dass** zwischen Dämpfungsglied (9) und drittem optischen Filter (11) ein Verzögerungsglied (10) geschaltet ist, dessen Verzögerung derart ausgelegt ist, dass die Durchlaufzeit durch beide Pfade angeglichen ist.

4. Optischer Kodekonverter nach Anspruch 2, **dadurch gekennzeichnet, dass** der Optisch/Elektrisch-Umsetzer (5) als Photodiode, der Elektrisch/Optisch-Umsetzer (7) als Laserdiode und das dritte optische Filter (11) als einstellbares Fabry-Perot Filter oder Mach-Zehnder Filter ausgeführt ist.

5. Optischer Kodekonverter nach Anspruch 1, **dadurch gekennzeichnet, dass** zwischen optischem Koppler (2) und zweitem optischen Filter (4) oder dem zweiten optischen Filter (4) nachgeschaltet ein optischer Inverter geschaltet ist.

6. Optischer Kodekonverter nach Anspruch 1, **dadurch gekennzeichnet, dass** zwischen dem optischen Koppler (2) und dem zweitem optischen Filter (4) oder dem zweitem optischen Filter (4) nachgeschaltet ein Wellenlängenfilter geschaltet ist, um das Ausgangssignal der optischen Breitbandquelle (3) in ein gewünschtes Wellenlängenband zu filtern, und dass das zweites optisches Filter (4) zur Filterung des zweiten optischen Übertragungskanals dient, wobei der zweite optische Überragungskanal sich vom ersten optischen Übertragungskanal unterscheidet oder dem ersten optischen Übertragungskanal gleicht.

7. Optischer Kodekonverter nach Anspruch 1, **dadurch gekennzeichnet, dass** die optische Breitbandquelle (3) als optischer Halbleiterverstärker oder als Leuchtdiode ausgeführt ist.

8. Optischer Kodekonverter nach Anspruch 1, **dadurch gekennzeichnet, dass** das erste optische Filter (1) als Fabry-Perot Filter, als Mach-Zehnder-Filter oder als AWG-Filter ausgeführt ist und dass das zweite optische Filter (4) als Fabry-Perot Filter, als Mach-Zehnder-Filter oder als AWG-Filter ausgeführt ist.

9. Optischer Kodekonverter nach Anspruch 1, **dadurch gekennzeichnet, dass** anstelle des optischen Koppler (2) ein optischer Circulator verwendet ist.

10. Optischer Router für ein OCDM-System beinhaltend mindestens zwei parallel geschaltete optische Kodekonverter nach Anspruch 1.

11. OCDM-System beinhaltend mindestens einen optische Router nach Anspruch 9, wobei jeder Router an einem Netzknoten angeordnet sind.
